(19) Europäisches Patentamt / European Patent Office / Office européen des brevets

(11) **EP 4 485 993 A1**

(12) **EUROPEAN PATENT APPLICATION**

(43) Date of publication:
**01.01.2025 Bulletin 2025/01**

(21) Application number: **24184406.7**

(22) Date of filing: **25.06.2024**

(51) International Patent Classification (IPC):
**H04W 24/08** (2009.01)  **H04W 24/10** (2009.01)
**H04L 5/00** (2006.01)  **H04B 17/345** (2015.01)
**H04L 5/14** (2006.01)

(52) Cooperative Patent Classification (CPC):
**H04L 5/14; H04B 17/345; H04L 5/0048;
H04W 24/08; H04W 24/10**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.06.2023  KR 20230082207
20.11.2023  KR 20230161433**

(71) Applicant: **Samsung Electronics Co., Ltd.
Suwon-si, Gyeonggi-do 16677 (KR)**

(72) Inventors:
• **YUM, Kunil
  16677 Suwon-si (KR)**
• **JOO, Hyunseung
  16677 Suwon-si (KR)**

(74) Representative: **Marks & Clerk LLP
15 Fetter Lane
London EC4A 1BW (GB)**

(54) **OPERATING METHODS OF BASE STATION AND USER EQUIPMENT FOR JOINT DECODING OF INTERFERENCE UPLINK IN WIRELESS COMMUNICATION SYSTEM**

(57)     A method of a base station, includes: receiving, from a reference UE within a coverage of the base station, user equipment (UE) capability information and identifying whether the reference UE is capable of performing full-duplex communication; transmitting, to the reference UE, uplink timing information of an interfering UE, wherein the interfering UE is geographically adjacent to the reference UE; receiving, from the reference UE, a crosslink interference (CLI) measurement report; and transmitting, to the reference UE, information about an uplink channel, based on the CLI measurement report, wherein the uplink channel acts as interference to the reference UE.

FIG. 1

10

EP 4 485 993 A1

**Description**

BACKGROUND

1. Field

The disclosure relates to operating methods of a base station and user equipment, and more particularly, to operating methods of a base station and user equipment for joint decoding of an interference uplink in a wireless communication system.

2. Background of Related Art

To meet wireless data traffic demand that is growing since commercialization of 4th generation (4G) communication systems, many efforts have been put to develop improved 5th generation (5G) or pre-5G communication systems, which are also called new radio (NR) systems in the 3rd Generation Partnership Project (3GPP) standard.

To achieve a high data transmission rate, 5G communication systems are considered to be embodied in a millimeter wave (mmWave) band (e.g., a 28-GHz band or a 39-GHz band). To alleviate the path loss of radio waves and increase the propagation range of radio waves in the mmWave band, beamforming, massive multiple-input multiple-output (MIMO), full dimension MIMO (FD-MIMO), array antenna, analog beamforming, hybrid beamforming, and large scale antenna techniques have been studied.

SUMMARY

Provided are operating methods of a base station and a user equipment (UE) to increase the downlink receiving performance of a reference UE by detecting a downlink of an interfering UE.

According to an aspect of the disclosure, a method of a base station, includes: receiving, from a reference UE within a coverage of the base station, user equipment (UE) capability information and identifying whether the reference UE is capable of performing full-duplex communication; transmitting, to the reference UE, uplink timing information of an interfering UE, wherein the interfering UE is geographically adjacent to the reference UE; receiving, from the reference UE, a cross-link interference (CLI) measurement report; and transmitting, to the reference UE, information about an uplink channel, based on the CLI measurement report, wherein the uplink channel acts as interference to the reference UE.

According to an aspect of the disclosure, a method of an electronic device, includes: transmitting, to a base station, user equipment (UE) capability information comprising information indicating whether the electronic device is capable of performing full-duplex communication; receiving, from the base station, uplink timing information of an interfering device, wherein the interfering device is geographically adjacent to the electronic device; measuring cross-link interference (CLI) using an uplink signal transmitted from the interfering device, based on the uplink timing information; transmitting, to the base station, a CLI measurement report; and receiving, from the base station, information about an uplink channel, wherein the uplink channel acts as interference to the electronic device.

According to an aspect of the disclosure, a method of a base station, includes: receiving, from a reference UE within a coverage of the base station, user equipment (UE) capability information, and identifying whether the reference UE is capable of performing full-duplex communication; transmitting, to the reference UE, configuration information regarding a cross-link interference (CLI) reference signal, wherein an interfering UE is geographically adjacent to the reference UE; transmitting, to the reference UE, timing window information for measuring the CLI reference signal; receiving, from the reference UE, a CLI measurement report; and transmitting, to the reference UE, information about an uplink channel, based on the CLI measurement report, wherein the uplink channel acts as interference to the reference UE.

According to an aspect of the disclosure, a method of an electronic device, includes: transmitting, to a base station, user equipment (UE) capability information comprising information indicating whether the electronic device is capable of performing full-duplex communication; receiving, from the base station, configuration information regarding a cross-link interference (CLI) reference signal; receiving, from the base station, timing window information for measuring the CLI reference signal; measuring CLI by detecting the CLI reference signal transmitted from an interfering device, based on the timing window information; transmitting, to the base station, a CLI measurement report; and receiving, from the base station, information about an uplink channel, wherein the uplink channel acts as interference to the electronic device.

At least some of the above and other features of the invention are set out in the claims.

BRIEF DESCRIPTION OF DRAWINGS

Embodiments will be more clearly understood from the following detailed description taken in conjunction with the accompanying drawings in which:

FIG. 1 illustrates a wireless communication system according to an embodiment;

FIG. 2 is a block diagram of a base station according to an embodiment;

FIG. 3 is a block diagram of an electronic device according to an embodiment;

FIG. 4A illustrates an example of propagation delay between nodes of a wireless communication system, according to an embodiment;

FIG. 4B illustrates the timing of propagation delay between nodes of a wireless communication system, according to an embodiment;

FIG. 5 is a flowchart of an operating method of a base station, according to an embodiment;

FIG. 6 illustrates the flow of signals in a wireless communication system, according to an embodiment;

FIG. 7 is a flowchart of an operating method of a reference user equipment (UE), according to an embodiment;

FIG. 8 is a flowchart of an operating method of a base station, according to an embodiment;

FIG. 9 illustrates the flow of signals in a wireless communication system, according to an embodiment;

FIG. 10 is a flowchart of an operating method of a reference UE, according to an embodiment; and

FIG. 11 is a block diagram of a wireless communication device according to an embodiment.

DETAILED DESCRIPTION

The terms as used in the disclosure are provided to merely describe specific embodiments, not intended to limit the scope of other embodiments. Singular forms include plural referents unless the context clearly dictates otherwise. The terms and words as used herein, including technical or scientific terms, may have the same meanings as generally understood by those skilled in the art. The terms as generally defined in dictionaries may be interpreted as having the same or similar meanings as or to contextual meanings of the relevant art. Unless otherwise defined, the terms should not be interpreted as ideally or excessively formal meanings. Even though a term is defined in the disclosure, the term should not be interpreted as excluding embodiments of the disclosure under circumstances.

The terms "transmit", "receive", and "communicate" as well as the derivatives thereof encompass both direct and indirect communication. The terms "include" and "comprise", and the derivatives thereof refer to inclusion without limitation. The term "or" is an inclusive term meaning "and/or". The phrase "associated with," as well as derivatives thereof, refer to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" refers to any device, system, or part thereof that controls at least one operation. The functionality associated with any particular controller may be centralized or distributed, whether locally or remotely. The phrase "at least one of," when used with a list of items, means that different combinations of one or more of the listed items may be used, and only one item in the list may be needed. For example, "at least one of A, B, and C" includes any of the following combinations: A, B, C, A and B, A and C, B and C, and A and B and C, and any variations thereof. As an additional example, the expression "at least one of a, b, or c" may indicate only a, only b, only c, both a and b, both a and c, both b and c, all of a, b, and c, or variations thereof. Similarly, the term "set" means one or more. Accordingly, the set of items may be a single item or a collection of two or more items.

Moreover, multiple functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as Read Only Memory (ROM), Random Access Memory (RAM), a hard disk drive, a Compact Disc (CD), a Digital Video Disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Hereinafter, embodiments are described in detail with reference to the accompanying drawings.

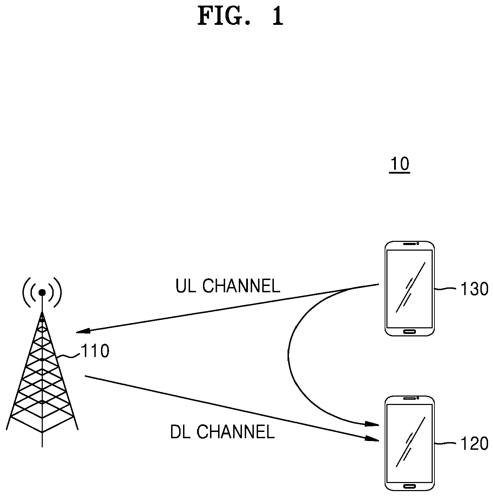

FIG. 1 is a diagram of a wireless communication system 10 according to an embodiment.

Referring to FIG. 1, the wireless communication system 10 may include a base station 110, a first user equipment (UE) 120, and a second UE 130. The base station 110, the first UE 120, and the second UE 130 may be 'nodes' using a wireless channel in a wireless communication system.

The base station 110 provides wireless access to the first UE 120 and the second UE 130. The base station 110 may have coverage defined by a certain geometrical area based on a distance by which a signal may be transmitted. The base station 110 may be referred to as an access point (AP), an evolved-node B (eNodeB or eNB), a 5th generation (5G) node, a gNodeB (gNB), a wireless point, or another term having a technical meaning equivalent thereto.

According to an embodiment, the base station 110 may be connected to at least one transmission/reception point (TRP). The base station 110 may transmit a downlink (DL) signal to or receive an uplink (UL) signal from the first UE 120 and the second UE 130 through at least one TRP. For example, the base station 110 may transmit a DL signal to the first UE 120 and receive a UL signal from the second UE 130. At this time, the DL signal and the UL signal may be transmitted and received simultaneously.

As a device used by a user, each of the first UE 120 and the second UE 130 may communicate with the base station 110 through a wireless channel. Each of the first UE 120 and the second UE 130 may be referred to as a terminal, a UE, a mobile station, a subscriber station, a customer premises equipment (CPE), a remote terminal, a wireless terminal, a user device, or another term having a technical meaning equivalent thereto.

According to one or more embodiments, the wireless communication system 10 may correspond to a full-duplex communication system. For example, each of the first UE 120 and the second UE 130 may receive a DL signal from the base station 110 and simultaneously transmit a UL signal to the base station 110. At this time, the UL signal of the second UE 130 may act as interference to the first UE 120. For example, the first UE 120 may receive a DL signal from the base station 110, and simultaneously, the second UE 130 may transmit a UL signal to the base station 110. When the first UE 120 is located near the second UE 130, the first UE 120 may simultaneously receive the DL signal from the base station 110 and the UL signal transmitted from the second UE 130 to the base station 110. In this case, the UL signal (transmitted from the second UE 130 to the base station 110) may act as interference to the first UE 120. Interference between the DL signal of the first UE 120 and the UL signal of the second UE 130 may be referred to as 'cross-link interference (CLI).'

According to one or more embodiments, interference that may occur in the first UE 120 may be shown in Table 1 below.

Table 1

|  | CLI | Inter-cell DL interference | Multi-user DL interference |
|---|---|---|---|
| Timing | Not synchronized | Not synchronized | Synchronized |
| Power | Different | Different | Same |
| Reference signal (RS) | N/A | Channel state information (CSI)-RS / CSI-interference measurement (IM) | CSI-RS for IM |
| gNB | Same | Different | Same |

In Table 1, an 'inter-cell DL interference environment' may refer to an environment in which a DL signal from a base station (i.e., a first base station) neighboring a serving base station (i.e., a second base station) connected to the first UE 120 acts as interference to a DL signal to the serving base station (i.e., the second base station). A 'multi-user DL interference environment' may refer to an environment in which when the serving base station (i.e., the second base station) transmits a DL signal to both of the first UE 120 and a plurality of UEs including the second UE 130, the DL signal transmitted to other UEs (other than the first UE 120) acts as interference to the first UE 120. In other words, the multi-user CLI is similar to inter-cell interference, but, in the multi-user DL interference environment, because the first UE 120 and the second UE 130 use the same base station, more methods may be considered for interference control, compared to the inter-cell interference.

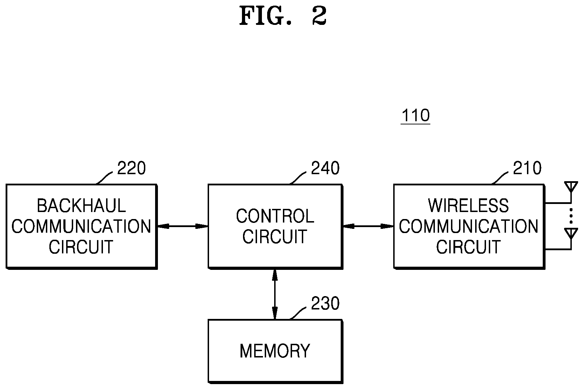

FIG. 2 is a block diagram of the base station 110 according to an embodiment. In FIG. 2, the base station 110 may include a wireless communication circuit 210, a backhaul communication circuit 220, a memory 230, and a control circuit 240.

The wireless communication circuit 210 may perform functions for transmission and reception of signals through a wireless channel. According to an embodiment, the wireless communication circuit 210 may perform conversion between a baseband signal and a bitstream according to the physical layer standard of a system. For example, the wireless communication circuit 210 may generate complex symbols by encoding and modulating a transmitted bitstream during data transmission and reconstruct a received bitstream by demodulating and decoding a baseband signal during data reception. The wireless communication circuit 210 may up-convert a baseband signal into a radio frequency (RF) band signal and transmit the RF band signal through an antenna or may down-convert an RF band signal received through an antenna into a baseband signal. For these operations, the wireless communication circuit 210 may include a transmission filter, a reception filter, an amplifier, a mixer, an oscillator, a digital-to-analog converter (DAC), an analog-to-digital converter (ADC), and/or the like.

The wireless communication circuit 210 may transmit and receive signals to external devices and from the external devices. The external devices may include the first UE 120 and the second UE 130. For example, the wireless communication circuit 210 may transmit a synchronization signal, a reference signal (RS), system information, a message, control information, data, or the like to the external devices. The wireless communication circuit 210 may perform beamforming. To give an orientation to a signal to be transmitted or received, the wireless communication circuit 210 may apply a beamforming weight to the signal. The wireless communication circuit 210 may change a formed beam and repeatedly transmit a signal to the external devices.

The backhaul communication circuit 220 may provide an interface for communication with other nodes in a network. In other words, the backhaul communication circuit 220 may convert a bitstream (, which is transmitted from the base station 110 to another node, e.g., another access node, another base station, an upper node, or a core network,) into a physical signal and may convert a physical signal received from another node into a bitstream.

The memory 230 may store data, such as a basic program for the operation of the base station 110, an application program, configuration information, or the like. The memory 230 may include volatile memory, non-volatile memory, or a combination of volatile memory and non-volatile memory.

The control circuit 240 may control operations of the base station 110. For example, the control circuit 240 may transmit and receive signals through the wireless communication circuit 210 or the backhaul communication circuit 220. The control circuit 240 may write data to and read data from the memory 230. For these operations, the control circuit 240 may include at least one processor. In some embodiments, the control circuit 240 may include or correspond to circuitry like a central processing unit (CPU), a microprocessor unit (MPU), an application processor (AP), a coprocessor (CP), a system-on-chip (SoC), or an integrated circuit (IC).

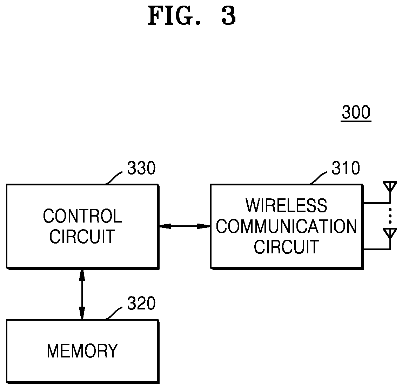

FIG. 3 is a block diagram of an electronic device 300 according to an embodiment. Referring to FIG. 3, the electronic device 300 may include a wireless communication circuit 310, a memory 320, and a control circuit 330. The electronic device 300 may correspond to the first UE 120 or the second UE 130 in FIG. 1.

The wireless communication circuit 310 may perform functions for transmission and reception of signals through a wireless channel. For example, the wireless communication circuit 310 may perform conversion between a baseband signal and a bitstream according to the physical layer standard of a system. For example, the wireless communication circuit 310 may generate complex symbols by encoding and modulating a transmitted bitstream during data transmission and reconstruct a received bitstream by demodulating and decoding a baseband signal during data reception. The wireless communication circuit 310 may up-convert a baseband signal into an RF band signal and transmit the RF band signal through an antenna or may down-convert an RF band signal received through an antenna into a baseband signal. For example, the wireless communication circuit 310 may include a transmission filter, a reception filter, an amplifier, a mixer, an oscillator, a DAC, an ADC, and/or the like. The wireless communication circuit 310 may perform beamforming. To give an orientation to a signal to be transmitted or received, the wireless communication circuit 310 may apply a beamforming weight to a signal.

The wireless communication circuit 310 may transmit and receive signals. The wireless communication circuit 310 may receive a DL signal. The DL signal may include a synchronization signal, an RS, system information, a configuration message, control information, DL data, or the like. The wireless communication circuit 310 may transmit a UL signal. The UL signal may include a signal related to random access, an RS (e.g., a sounding RS (SRS), a demodulation RS (DMRS), or a phase tracking RS (PTRS)), or UL data.

The memory 320 may store data, such as a basic program, an application program, configuration information, or the like, for the operation of the electronic device 300. The memory 320 may include volatile memory, non-volatile memory, or a combination of volatile memory and non-volatile memory. The storage 320 may provide stored data at the request of the control circuit 330.

The control circuit 330 may generally control operations of the electronic device 300. For example, the control circuit 330 may transmit and receive signals through the wireless communication circuit 310. The control circuit 330 may write data to and read data from the memory 320. For these operations, the control circuit 330 may include at least one processor or microprocessor or may be part of a processor. When the control circuit 330 is part of a processor, part of the wireless communication circuit 310 and the control circuit 330 may be referred to as a communication processor. In some embodiments, the control circuit 330 may include or correspond to circuitry like a CPU, a MPU, an AP, a CP, a SoC, or an IC.

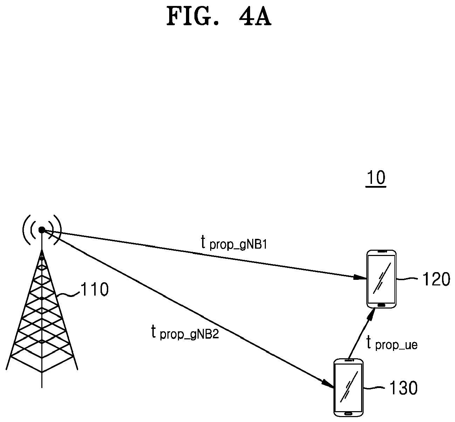

FIG. 4A illustrates an example of propagation delay between nodes of a wireless communication system, according to an embodiment.

Referring to FIG. 4A, the propagation delay between the base station 110 and the first UE 120 may correspond to $t_{prop\_gNB1}$. The propagation delay between the base station 110 and the second UE 130 may correspond to $t_{prop\_gNB2}$. Because a UL signal of the second UE 130 is received by the first UE 120 and thus acts as interference to a DL signal, the propagation delay between the first UE 120 and the second UE 130 may also be considered. The propagation delay between the first UE 120 and the second UE 130 may correspond to $t_{prop\_ue}$.

When the propagation delay between the base station 110 and the first UE 120 is $t_{prop\_gNB1}$ and the propagation delay between the base station 110 and the second UE 130 is $t_{prop\_gNB2}$, a timing advance (TA), $TA_s$, of the first UE 120 and a TA, $TA_l$, of the second UE 130 may be respectively defined as Equations 1 and 2.

$$[\text{Equation 1}]$$

$$TA_s = 2 * (t_{prop\_gNB1})$$

$$[\text{Equation 2}]$$

$$TA_l = 2 * (t_{prop\_gNB2})$$

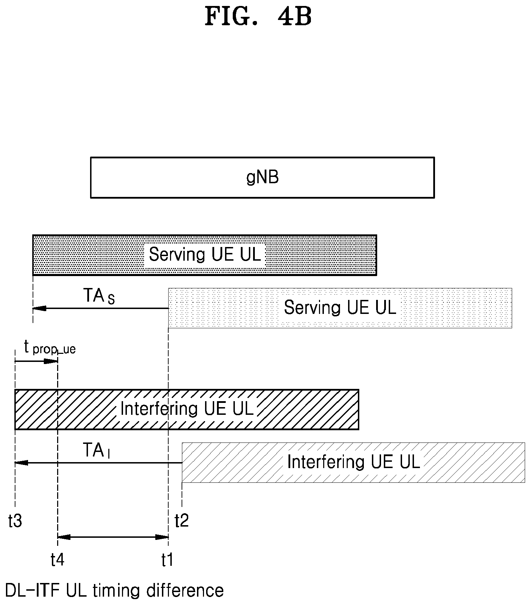

Referring to FIG. 4B, the first UE 120 may receive a DL signal from the base station 110 at a time point t1. The second UE 130 may receive a DL signal from the base station 110 at a time point t2. At this time, the second UE 130 may transmit a UL signal to the base station 110 from a time point t3 that is earlier than the time point t2 by the TA of the second UE 130. However, it may take the propagation delay, $t_{prop\_ue}$, between the first UE 120 and the second UE 130 for the UL signal that is transmitted from the second UE 130 to the base station 110 to reach the first UE 120 and act as interference. In other words, the timing difference between the DL signal of the first UE 120 and the UL signal of the second UE 130 may be t1 - t4, wherein the UL signal of the second UE 130 may act as interference to the DL signal of the first UE 120.

Because the distance between the base station 110 and the first UE 120 is different from the distance between the base station 110 and the second UE 130, the TA, $TA_s$, of the first UE 120 may not be the same as the TA, $TA_i$, of the second UE 130. However, when the UL signal of the second UE 130 is received by the first UE 120 and thus acts as interference, the first UE 120 may be sufficiently close to the second UE 130 and DL signal reception power is similar to UL signal transmission power (e.g., SIR<20 dB). Accordingly, the propagation delay, $t_{prop\_ue}$, between the first UE 120 and the second UE 130 may be negligibly small. When the propagation delay, $t_{prop\_ue}$, between the first UE 120 and the second UE 130 is ignored, the base station 110 may simply calculate and inform the first UE 120 of the difference, t1 - t4, between the reception time of the DL signal of the first UE 120 and the transmission time of the UL signal of the second UE 130 or may calculate and inform the first UE 120 of the difference between the TA, $TA_s$, of the first UE 120 and the TA, $TA_l$, of the second UE 130.

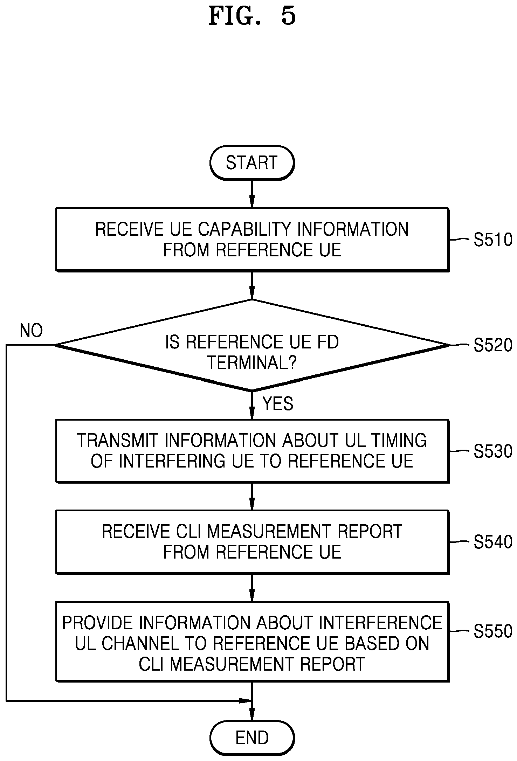

FIG. 5 is a flowchart of an operating method of the base station 110, according to an embodiment.

In operation S510 of FIG. 5, the base station 110 may receive UE capability information from a reference UE. The reference UE may correspond to an electronic device, to which a UL signal transmitted from a neighboring UE acts as interference. The reference UE may correspond to the first UE 120 in FIG. 1. Thus, hereinafter, the reference UE has the same reference number 120. The reference UE 120 may be referred to as any one of other various terms, such as a serving UE and a victim UE. The neighboring UE may correspond to an electronic device, which is the subject generating interference to the reference UE 120, and thus, may be referred to as an interfering UE. The UE capability information received from the reference UE 120 may include information indicating whether the reference UE 120 is capable of 'full duplex' (FD) communication.

In operation S520, the base station 110 may identify whether the reference UE 120 is a FD terminal. The base station 110 may decode the UE capability information and determine whether the reference UE 120 is capable of performing FD communication. For example, when the reference UE 120 does not support FD communication, interference by the UL signal of the neighboring UE does not occur. Accordingly, the method may end and an operation of removing inter-symbol interference may be performed. When the reference UE 120 supports FD communication, the method may proceed to operation S530 to jointly detect the UL signal from the interfering UE.

In operation S530, the base station 110 may provide the reference UE 120 with information related to the UL timing of the interfering UE. According to an embodiment, the base station 110 may provide a propagation delay difference to the reference UE 120. For example, the base station 110 may calculate a difference between a propagation delay value (between the base station 110) and the interfering UE and a propagation delay value (between the base station 110 and the reference UE 120) and may provide the calculated difference to the reference UE 120. According to some embodiments, the base station 110 may provide a timing advance difference to the reference UE 120. For example, the base station 110 may provide the reference UE 120 with a difference between the TA, $TA_s$, of the reference UE 120 and the TA, TAi, of the interfering UE.

In operation S540, the base station 110 may receive a CLI measurement report from the reference UE 120. The reference UE 120 may identify the UL timing of the interfering UE based on the TA difference value or the propagation delay difference value, which is received from the base station 110 in operation S530, and may perform CLI measurement based on the UL timing. In some embodiments, the base station 110 may schedule time/frequency resources for the CLI measurement report in advance. The reference UE 120 may transmit a CLI measurement result to the base station 110 through the scheduled time/frequency resources. For example, the CLI measurement result may include at least one of the group consisting of CLI-receive signal strength indicator (RSSI), CLI-reference signal received power (RSRP), and CLI-reference signal received quality (RSRQ). The CLI measurement report may be transmitted through a physical uplink control channel (PUCCH) and/or a physical uplink shared channel (PUSCH) of the reference UE 120. Considering the size of the CLI measurement report, the reference UE 120 may transmit the CLI measurement report to the base station 110 by using a PUCCH (, such as PUCCH Type 2, having a relatively large payload size,) or a PUSCH.

In operation S550, the base station 110 may provide the reference UE 120 with information about an interference UL channel based on the CLI measurement report. The base station 110 may share the information about the UL channel of the interfering UE with the reference UE 120 based on the CLI measurement report indicating CLI between the DL of the reference UE 120 and the UL of the interfering UE. The information about the UL channel of the interfering UE, which the base station 110 provides to the reference UE 120, may at least include transmission or non-transmission of an interference UL channel, modulation (candidate), a DMRS port value, the number of DMRS code division multiplexing (CDM) groups, a DMRS configuration including a physical resource block (PRB) bundling size, time/frequency resources, resource allocation information including a period, an offset, activation, and deactivation in the case of configure-grant PUSCH, frequency hopping information, and SRS resource indicator (SRI) information.

Although the descriptions above are based on that the base station 110 provides the reference UE 120 with information about UL timing, embodiments are not limited thereto. According to one or more embodiments, the base station 110 may not perform separate signaling for information about UL timing to the reference UE 120. At this time, the reference UE 120 may be assumed to be very close to the interfering UE. For example, it may be assumed that there is no propagation delay, $t_{prop\_ue}$, between the reference UE 120 and the interfering UE and TA, $TA_s$, according to Equation 1 is the same as TA, TAi, according to Equation 2. Accordingly, the reference UE 120 may approximate the timing interval between the DL signal of the reference UE 120 and the UL signal of the interfering UE by using the TA, $TA_s$, according to Equation 1 and perform the remaining operations.

When a CLI-RS is used, the reference UE 120 may obtain a PUSCH timing of the interfering UE with respect to a physical downlink shared channel (PDSCH) timing of the reference UE 120, based on a reception time of the CLI-RS from the interfering UE, and may obtain a DL-ITF UL timing difference, i.e., a time difference between the PDSCH of the reference UE 120 and the PUSCH of the interfering UE, based on the obtained PUSCH timing. In this case, instead of a separate signaling, CLI-RS configuration information and CLI-RS reception configuration method may be shared among the base station 110, the reference UE 120, and the interfering UE. Or the base station 110 may inform the reference UE 120 and the interfering UE of the CLI-RS configuration information and CLI-RS reception configuration method.

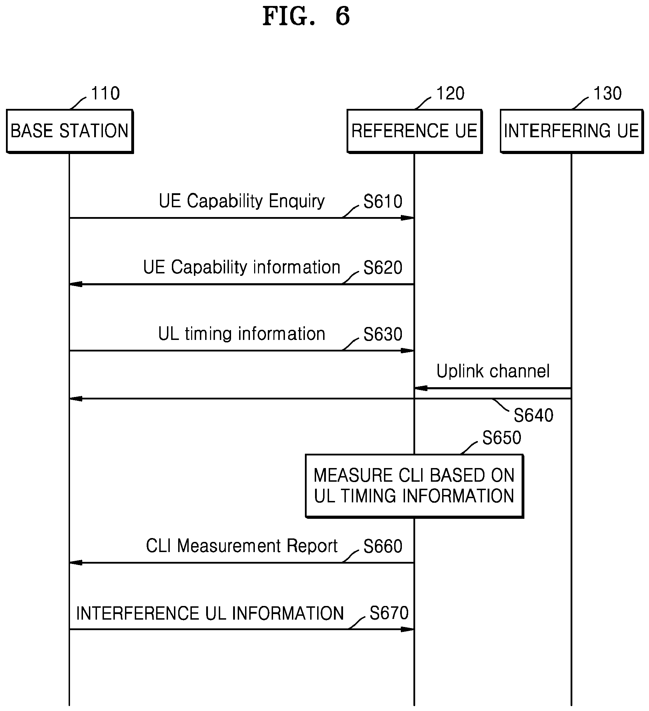

FIG. 6 illustrates the flow of signals in the wireless communication system 10, according to an embodiment.

In operation S610, a base station (e.g., the base station 110 in FIG. 1) may request UE capability information from the reference UE 120. For example, the base station 110 may transmit a UE capability inquiry to the reference UE 120.

In operation S620, the reference UE 120 may provide the UE capability information to the base station 110. The reference UE 120 may respond with the UE capability information in response to the reception of the UE capability inquiry from the base station 110. The UE capability information may include whether the reference UE 120 supports FD communication.

In operation S630, the base station 110 may provide UL timing information to the reference UE 120. For example, the UL timing information may correspond to the difference between the propagation delay, $t_{prop\_gNB2}$, of an interfering UE (e.g., the second UE 130 in FIG. 1) and the propagation delay, $t_{prop\_gNB1}$, of the reference UE 120. For example, the UL timing information may correspond to the difference between the TA, $TA_s$, of the reference UE 120 and the TA, TAi, of the interfering UE 130. Hereinafter, the interfering UE has the same reference number 130.

In operation S640, the interfering UE 130 may transmit a UL channel to the base station 110. At this time, the interfering UE 130 may be assumed to be sufficiently close to the reference UE 120. At the same time, the reference UE 120 may receive a DL channel from the base station 110. Accordingly, the UL channel transmitted from the interfering UE 130 to the base station 110 may act as interference to the reference UE 120.

In operation S650, the reference UE 120 may measure CLI based on the UL timing information. For example, the reference UE 120 may identify a timing at which the interfering UE 130 transmits the UL channel, based on the UL timing information received from the base station 110. The reference UE 120 may measure the CLI by the UL channel, which is transmitted by the interfering UE 130 in operation S640. In some embodiments, operations S640 and S650 may be performed substantially at the same time.

In operation S660, the reference UE 120 may transmit a CLI measurement report to the base station 110. The reference UE 120 may provide the base station 110 with a CLI measurement result including at least one selected from the group consisting of RSSI, RSRQ, and RSRP of the UL signal of the interfering UE 130.

In operation S670, the base station 110 may provide interference UL information to the reference UE 120. The interference UL information may at least include transmission or non-transmission of an interference UL channel, modulation (candidate), a DMRS port value, the number of DMRS CDM groups, a DMRS configuration including a PRB bundling size, time/frequency resources, resource allocation information including a period, an offset, activation, and deactivation in the case of configure-grant PUSCH, frequency hopping information, and SRI information.

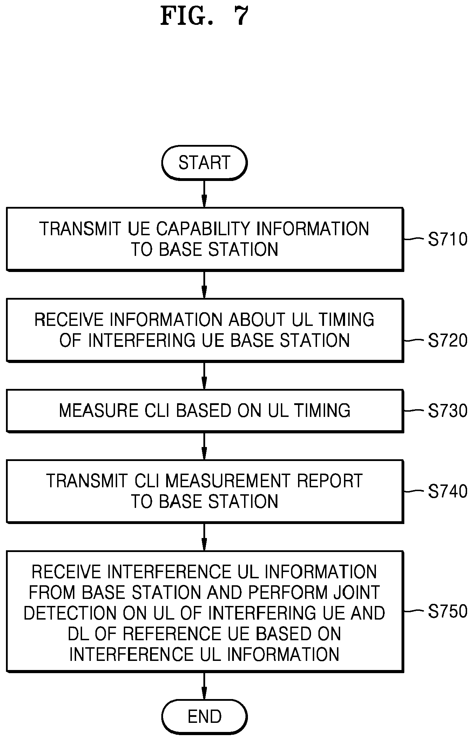

FIG. 7 is a flowchart of an operating method of a reference UE (e.g., the first UE 120 in FIG. 1) according to an embodiment. Referring to FIG. 7, the reference UE 120 may transmit UE capability information to the base station 110 in FIG. 1.

In operation S710, the UE capability information may be transmitted in response to the reception of a UE capability inquiry from the base station 110. The UE capability information may include whether the reference UE supports FD communication.

In operation S720, the reference UE 120 may receive UL timing information of an interfering UE (e.g., the second UE 130 in FIG. 1) from the base station 110. For example, the UL timing information may correspond to the difference between the propagation delay of the interfering UE 130 and the propagation delay of the reference UE 120. For example, the UL timing information may correspond to the difference between the TA, $TA_s$, of the reference UE 120 and the TA, TAi, of the interfering UE 130.

In operation S730, the reference UE 120 may measure CLI based on the UL timing information. The reference UE 120 may identify a timing at which the interfering UE 130 transmits a UL signal, based on the UL timing information received from the base station 110 in operation S720. The reference UE 120 may measure at least one selected from the group consisting of RSSI, RSRQ, and RSRP with respect to the UL signal at the identified timing.

In operation S740, the reference UE 120 may transmit a CLI measurement report to the base station 110. The CLI measurement report may include at least one selected from the group consisting of CLI-RSRP, CLI-RSRQ, and CLI-RSSI, which are measured by the reference UE 120.

In operation S750, the reference UE 120 may receive interference UL information from the base station 110 and perform joint detection on the UL of the interfering UE 130 and the DL of the reference UE 120 based on the interference UL information. The interference UL information may at least include transmission or non-transmission of an interference UL channel, modulation (candidate), a DMRS port value, the number of DMRS CDM groups, a DMRS configuration including a PRB bundling size, time/frequency resources, resource allocation information including a period, an offset, activation, and deactivation in the case of configure-grant PUSCH, frequency hopping information, and SRI information. The reference UE 120 may detect the UL of the interfering UE 130 based on the interference UL information. In detail, the reference UE 120 may jointly detect a DL from the base station 110 and the UL from the interfering UE 130 based on the interference UL information.

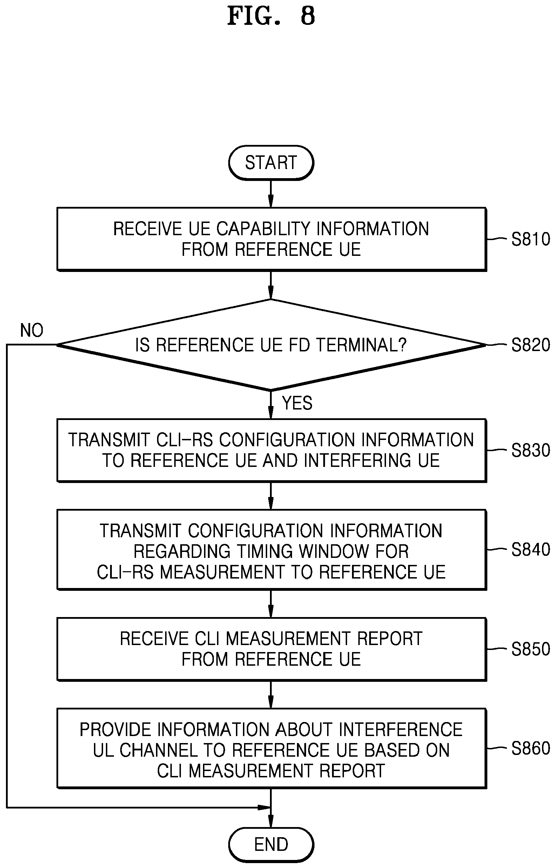

FIG. 8 is a flowchart of an operating method of the base station 110, according to an embodiment.

In operation S810 of FIG. 8, the base station 110 may receive UE capability information from a reference UE (e.g., the first UE 120 in FIG. 1). The UE capability information received from the reference UE 120 may include information indicating whether the reference UE 120 is capable of performing FD communication.

In operation S820, the base station 110 may identify whether the reference UE 120 is an FD terminal. The base station 110 may decode the UE capability information and determine whether the reference UE 120 is capable of performing FD communication. For example, when the reference UE does not support FD communication, interference by the UL signal of the neighboring UE does not occur. Accordingly, the current method may end and an operation of removing inter-symbol interference may be performed. When the reference UE 120 supports FD communication, the method may proceed to operation S830 to jointly detect the UL signal from an interfering UE (e.g., the second UE 130 in FIG. 1).

In operation S830, the base station 110 may transmit CLI-RS configuration information to the reference UE 120 and the interfering UE 130. The CLI-RS may refer to an RS for measuring the propagation delay, $t_{prop\_ue}$, between the reference UE 120 and the interfering UE 130 and/or the intensity of CLI. For example, the CLI-RS configuration information may at least include a port number, transmission power, a symbol position in a slot, a CLI-RS time resource including a slot-level period/offset, a subcarrier position in a resource block (RB), a CLI-RS frequency resource including an RB position, a sequence identity (ID) ($N_{ID}$) for sequence initialization, and transmit (Tx)/receive (Rx) beam information (e.g., a transmission configuration indicator (TCI) state). The transmission power may refer to a power offset of a transmitted CLI-RS relative to the power of an interference UL, such as PUCCH or PUSCH. When there is not information about the transmission power, it may be assumed that CLI-RS transmission power is the same as PUSCH transmission power.

According to one or more embodiments, the base station 110 may use a predefined RS for CLI measurement. For example, the base station 110 may transmit information about an RS type and an RS ID to the reference UE 120. For example, the RS type may include at least an SRS resource, a CSI-RS resource, or a CLI-RSSI resource. The RS ID may be based on the mapping that is agreed between the base station 110 and the reference UE 120 in advance.

According to one or more embodiments, the base station 110 may transmit the signaling of CLI-RS configuration information to the reference UE 120 through remote radio control (RRC), a media access control (MAC) control element (CE), and/or downlink control information (DCI). For example, the base station 110 may transmit information, such as Tx/Rx beam information, which may change for each slot through MAC CE and/or DCI.

In operation S840, the base station 110 may transmit configuration information regarding a timing window for CLI RS measurement to the reference UE 120. The timing window may include information indicating a period for the reference UE 120 to detect a CLI-RS transmitted from the interfering UE 130. In other words, because the propagation delay value of the CLI-RS is not known, the CLI-RS may be detected by setting a time period taking into account a margin before and after the transmission timing of the CLI-RS. According to an embodiment, the timing window for the CLI-RS measurement may be set and/or instructed by the base station 110 to the reference UE 120 through RRC, MAC CE, and/or DCI. The timing window may be defined at a symbol level in order to clearly check whether there is synchronization at the symbol level. At this time, a period/offset (at a slot level) for measurement may be additionally set separately from the RS configuration information described above. For example, when based on DCI, "measurement enable" may be signaled to instruct to attempt measurement of a CLI-RS in a slot in which the DCI is received. For example, "measurement offset" may be signaled to indicate a slot position for CLI-RS measurement based on DCI timing received by the reference UE 120.

According to one or more embodiments, configuration information regarding a timing window for CLI-RS measurement may not be provided. When configuration information regarding a timing window for CLI-RS measurement is not provided, the reference UE 120 may attempt to detect a CLI-RS based on the symbol position of a configured CLI-RS or symbols on a preceding timing.

In operation S850, the base station 110 may receive a CLI measurement report from the reference UE 120. The reference UE 120 may attempt to detect a CSI-RS of the interfering UE 130 in the timing window set by the base station 110.

According to an embodiment, when the CSI-RS of the interfering UE 130 is detected, the CLI measurement report may include information about interference characteristics, which include a timing and power measured based on the CLI-RS. For example, a symbol offset may be used for the timing and L1-RSRP of the CLI-RS may be used for the power.

According to an embodiment, the CSI-RS of the interfering UE 130 may not be detected. In this case, the CLI measurement report may include information indicating non-detection, that is, information indicating that a CLI-RS is not detected. When receiving the CLI measurement report indicating that a CLI-RS is not detected, the base station 110 may determine that the timing of the interfering UE 130 is so different from the timing of the reference UE 120 that joint detection of a CLI-RS may be impossible or that the interfering UE 130 is so far away from the reference UE 120 that CLI control may be not required.

In operation S860, the base station 110 may provide the reference UE 120 with information about an interference UL channel based on the CLI measurement report. The base station 110 may share the information about the UL channel of the interfering UE 130 with the reference UE 120 based on the CLI measurement report indicating CLI between the reference UE 120 and the interfering UE 130. The information about the UL channel of the interfering UE 130, which the base station 110 provides to the reference UE 120, may at least include transmission or non-transmission of an interference UL channel, modulation (candidate), a DMRS port value, the number of DMRS CDM groups, a DMRS configuration including a PRB bundling size, time/frequency resources, resource allocation information including a period, an offset, activation, and deactivation in the case of configure-grant PUSCH, frequency hopping information, and SRI information.

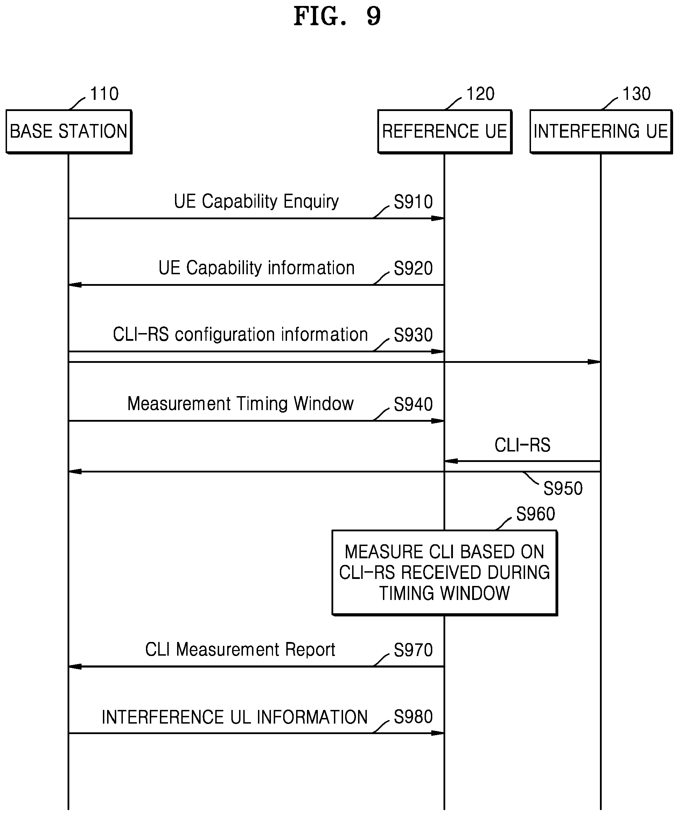

FIG. 9 illustrates the flow of signals in the wireless communication system 10, according to an embodiment.

In operation S910, a base station (e.g., the base station 110 in FIG. 1) may request UE capability information from a reference UE (e.g., the first UE 120). For example, the base station 110 may transmit a UE capability inquiry to the reference UE 120.

In operation S920, the reference UE 120 may provide the UE capability information to the base station 110. The reference UE 120 may respond with the UE capability information in response to the reception of the UE capability inquiry from the base station 110. The UE capability information may include whether the reference UE 120 supports FD communication.

In operation S930, the base station 110 may provide CLI-RS configuration information to the reference UE 120 and the interfering UE 130. The CLI-RS may refer to an RS for measuring the propagation delay, $t_{prop\_ue}$, between the reference UE 120 and the interfering UE 130 and/or the intensity of CLI. For example, the CLI-RS configuration information may at least include a port number, transmission power, a symbol position in a slot, a CLI-RS time resource including a slot-level period/offset, a subcarrier position in an RB, a CLI-RS frequency resource including an RB position, a sequence ID ($N_{ID}$) for sequence initialization, and Tx/Rx beam information (e.g., TCI state). The transmission power may refer to a power offset of a transmitted CLI-RS relative to the power of an interference UL, such as PUCCH or PUSCH. When there is not information about the transmission power, it may be assumed that CLI-RS transmission power is the same as PUSCH transmission power.

In operation S940, the base station 110 may transmit configuration information regarding a timing window for CLI RS measurement to the reference UE 120. The timing window may include information indicating a period for the reference UE 120 to detect a CLI-RS transmitted from the interfering UE 130.

In operation S950, the interfering UE 130 may transmit a CLI-RS to the base station 110. The interfering UE 130 may transmit the CLI-RS according to the CLI-RS configuration information, which is received from the base station 110 in operation S930.

In operation S960, the reference UE 120 may measure CLI based on the CLI-RS during the timing window. The CLI-RS transmitted from the interfering UE 130 to the base station 110 may be received by the reference UE 120 and may thus act as interference. The reference UE 120 may monitor whether the CLI-RS is detected during the timing window.

In operation S970, the reference UE 120 may transmit a CLI measurement report to the base station 110. For example, when the CSI-RS of the interfering UE 130 is detected, the CLI measurement report may include information about interference characteristics, which include a timing measured based on the CLI-RES and power. When the CSI-RS of the interfering UE 130 is not detected, the CLI measurement report may include information indicating that the CLI-RS is not detected.

In operation S980, the base station 110 may provide interference UL information to the reference UE 120. The interference UL information may at least include transmission or non-transmission of an interference UL channel, modulation (candidate), a DMRS port value, the number of DMRS CDM groups, a DMRS configuration including a PRB bundling size, time/frequency resources, resource allocation information including a period, an offset, activation, and deactivation in the case of configure-grant PUSCH, frequency hopping information, and SRI information. However, when the CLI measurement report in operation S970 includes information indicating that the CLI-RS is not detected, the base station 110 may skip (or bypass) transmitting the interference UL information to the reference UE 120.

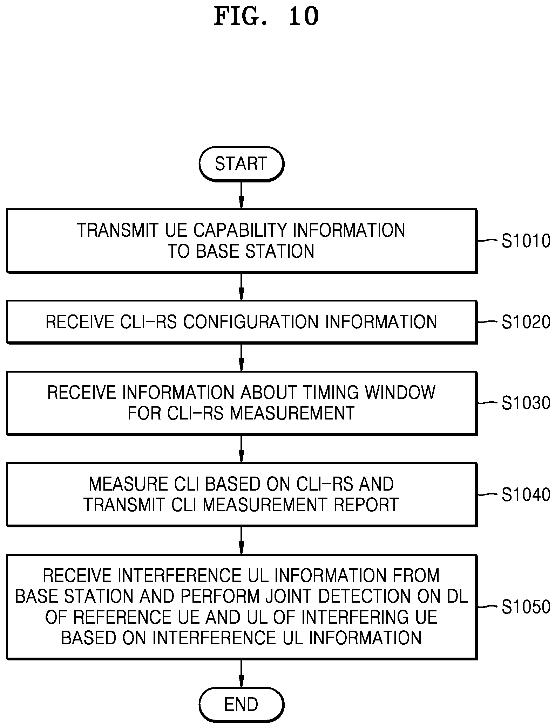

FIG. 10 is a flowchart of an operating method of a reference UE, according to an embodiment.

In operation S1010 of FIG. 10, the reference UE 120 may transmit UE capability information to the base station 110. The UE capability information may be transmitted to the base station 110 in response to the reception of a UE capability inquiry from the base station 110. The UE capability information may include whether the reference UE 120 supports FD communication.

In operation S1020, the reference UE 120 may receive CLI-RS configuration information from the base station 110. The CLI-RS may refer to an RS for measuring the propagation delay, $t_{prop\_ue}$, between the reference UE 120 and the interfering UE 130 and/or the intensity of CLI. The CLI-RS configuration information may at least include a port number, transmission power, a symbol position in a slot, a CLI-RS time resource including a slot-level period/offset, a subcarrier position in an RB, a CLI-RS frequency resource including an RB position, a sequence ID ($N_{ID}$) for sequence initialization, and Tx/Rx beam information (e.g., TCI state).

In operation S1030, the reference UE 120 may receive configuration information regarding a timing window for CLI RS measurement from the base station 110. The timing window may include information indicating a period for the reference UE 120 to detect a CLI-RS transmitted from the interfering UE 130.

In operation S1040, the reference UE 120 may measure CLI based on the CLI-RS and transmit a CLI measurement report to the base station 110. For example, the reference UE 120 may attempt to detect a CSI-RS, which is transmitted from the interfering UE 130, during the timing window. The CLI measurement report may include information about interference characteristics, which include a timing measured based on the CLI-RES and power. For example, the CLI measurement report may at least include CLI-RSSI, CLI-RSRP, and CLI-RSRQ. The CLI measurement report may be transmitted through the PUCCH and/or the PUSCH of the reference UE 120.

In operation S1050, the reference UE 120 may receive interference UL information from the base station 110 and perform joint detection on the UL of the interfering UE 130 and the DL of the reference UE 120 based on the interference UL information. The interference UL information may at least include transmission or non-transmission of an interference UL channel, modulation (candidate), a DMRS port value, the number of DMRS CDM groups, a DMRS configuration including a PRB bundling size, time/frequency resources, resource allocation information including a period, an offset, activation, and deactivation in the case of configure-grant PUSCH, frequency hopping information, and SRI information. The reference UE 120 may detect the UL of the interfering UE 130 based on the interference UL information. In detail, the reference UE 120 may jointly detect a DL from the base station 110 and the UL from the interfering UE 130 based on the interference UL information.

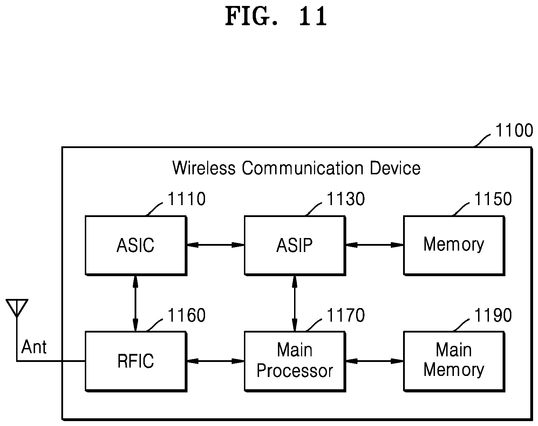

FIG. 11 is a block diagram of a wireless communication device 1100 according to an embodiment.

Referring to FIG. 11, a wireless communication device 1100 may include a modem, a radio frequency integrated circuit (RFIC) 1160. The modem may include an application specific integrated circuit (ASIC) 1110, an application specific instruction set processor (ASIP) 1130, a memory 1150, a main processor 1170, and a main memory 1190. The wireless communication device 1100 of FIG. 11 may correspond to the first UE 120 (of FIG. 1) or the electronic device 300 (of FIG. 3), according to an embodiment. That is, the ASIC 1110, the ASIP 1130, and/or the main processor 1170 may correspond to the control circuit 330 of FIG. 3. Also, the RFIC 1160 may correspond to the wireless communication circuit 310 of FIG. 3. Further, the memory 1150 and/or the main memory 1190 may correspond to the memory 320 of FIG. 3.

The RFIC 1160 may be connected to an antenna Ant and may receive a signal from or transmit a signal to the outside using a wireless communication network. The ASIP 1130 may be customized for a specific purpose and may support an instruction set dedicated to a specific application and execute an instruction included in the instruction set. The memory 1150 may communicate with the ASIP 1130 and may store a plurality of instructions, which are executed by the ASIP 1130, as a non-transitory storage device. As a non-limiting example, the memory 1150 may include any type of memory, such as random access memory (RAM), read-only memory (ROM), tape, a magnetic disk, an optical disk, volatile memory, non-volatile memory, or a combination thereof, which is accessible by the ASIP 1130.

The main processor 1170 may control the wireless communication device 1100 by executing instructions. For example, the main processor 1170 may control the ASIC 1110 and the ASIP 1130 and process data received through a wireless communication network or a user input to the wireless communication device 1100. The main memory 1190 may communicate with the main processor 1170 and may store a plurality of instructions, which are executed by the main processor 1170, as a non-transitory storage device. As a non-limiting example, the main memory 1190 may include any type of memory, such as RAM, ROM, tape, a magnetic disk, an optical disk, volatile memory, non-volatile memory, or a combination thereof, which is accessible by the main processor 1170.

While the disclosure has been particularly shown and described with reference to embodiments thereof, it will be understood that various changes in form and details may be made therein without departing from the scope of the following claims.

## Claims

1. A method of a base station, the method comprising:

   receiving, from a reference UE within a coverage of the base station, user equipment (UE) capability information, and identifying whether the reference UE is capable of performing full-duplex communication;
   transmitting, to the reference UE, configuration information regarding a cross-link interference (CLI) reference signal, wherein an interfering UE is geographically adjacent to the reference UE;
   transmitting, to the reference UE, timing window information for measuring the CLI reference signal;
   receiving, from the reference UE, a CLI measurement report; and
   transmitting, to the reference UE, information about an uplink channel, based on the CLI measurement report, wherein the uplink channel acts as interference to the reference UE.

2. The method of claim 1, wherein the configuration information regarding the CLI reference signal comprises at least one of a port number, transmission power, a symbol position in a slot, a time resource including a slot-level period/offset, a subcarrier position in a resource block (RB), a frequency resource including an RB position, a sequence identity (ID) for sequence initialization, and transmit /receive beam information.

3. The method of claim 2, wherein the configuration information regarding the CLI reference signal is transmitted to the reference UE based on at least one of remote radio control (RRC), a media access control (MAC) control element (CE), and downlink control information (DCI), and
   wherein the transmit /receive beam information is transmitted to the reference UE through at least one of the MAC CE and the DCI.

4. The method of claim 1, wherein the timing window information comprises information indicating a slot position for measurement of the CLI reference signal and transmitted to the reference UE through at least one of remote radio control (RRC), a media access control (MAC) control element (CE), and downlink control information (DCI).

5. The method of any preceding claim, wherein, when the reference UE detects the CLI reference signal, the CLI measurement report comprises a symbol offset and L1-reference signal received power (RSRP) of the CLI reference signal,

> wherein the symbol offset indicates a timing measured based on the CLI reference signal, and
> wherein the L1-RSRP indicates power measured based on the CLI reference signal.

6. The method of any preceding claim, wherein, when the reference UE fails to detect the CLI reference signal, the CLI measurement report comprises information indicating that the CLI reference signal is not detected.

7. The method of any preceding claim, wherein the information about the uplink channel comprises at least one of transmission or non-transmission of an interference uplink channel, modulation (candidate), a demodulation reference signal (DMRS) port value, a number of DMRS code division multiplexing (CDM) groups, a DMRS configuration comprising a physical resource block (PRB) bundling size, time/frequency resources, resource allocation information comprising a period, an offset, activation, and deactivation in a case of configure-grant physical uplink shared channel (PUSCH), frequency hopping information, and sounding reference signal (SRS) resource indicator (SRI) information.

8. A method of an electronic device, the method comprising:

> transmitting, to a base station, user equipment (UE) capability information comprising information indicating whether the electronic device is capable of performing full-duplex communication;
> receiving, from the base station, configuration information regarding a cross-link interference (CLI) reference signal;
> receiving, from the base station, timing window information for measuring the CLI reference signal;
> measuring CLI by detecting the CLI reference signal transmitted from an interfering device, based on the timing window information;
> transmitting, to the base station, a CLI measurement report; and
> receiving, from the base station, information about an uplink channel, wherein the uplink channel acts as interference to the electronic device.

9. The method of claim 8, further comprising jointly detecting a downlink signal from the base station and an uplink signal received from the interfering device, based on the information about the uplink channel.

10. The method of claim 8 or 9, wherein the configuration information regarding the CLI reference signal comprises at least one of a port number, transmission power, a symbol position in a slot, a time resource including a slot-level period/offset, a subcarrier position in a resource block (RB), a frequency resource including an RB position, a sequence identity (ID) for sequence initialization, and transmit /receive beam information.

11. The method of claim 10, wherein the configuration information regarding the CLI reference signal is received from the base station based on at least one of remote radio control (RRC), a media access control (MAC) control element (CE), and downlink control information (DCI), and
wherein the transmit /receive beam information is received from the base station through at least one of the MAC CE and the DCI.

12. The method of any one of claims 8 to 11, wherein the timing window information comprises information indicating a slot position for measurement of the CLI reference signal and received from the base station through at least one of remote radio control (RRC), a media access control (MAC) control element (CE), and downlink control information (DCI).

13. The method of any one of claims 8 to 12, wherein, when the electronic device detects the CLI reference signal transmitted from the interfering device based on the timing window information, the CLI measurement report comprises a symbol offset and L1-reference signal received power (RSRP) of the CLI reference signal,

> wherein the symbol offset indicates a measured timing, and
> wherein the L1-RSRP indicates measured power.

14. The method of any one of claims 8 to 13, wherein, when the electronic device fails to detect the CLI reference signal, the CLI measurement report comprises information indicating that the CLI reference signal is not detected.

15. The method of any one of claim 8 to 14, wherein the information about the uplink channel comprises at least one of transmission or non-transmission of an interference uplink channel, modulation (candidate), a demodulation reference signal (DMRS) port value, a number of DMRS code division multiplexing (CDM) groups, a DMRS configuration including a physical resource block (PRB) bundling size, time/frequency resources, resource allocation information including a period, an offset, activation, and deactivation in a case of configure-grant physical uplink shared channel (PUSCH), frequency hopping information, and sounding reference signal (SRS) resource indicator (SRI) information.

# FIG. 1

# FIG. 2

# FIG. 3

300

330

CONTROL
CIRCUIT

310

WIRELESS
COMMUNICATION
CIRCUIT

320

MEMORY

FIG. 4A

# FIG. 4B

gNB

Serving UE UL

TA$_S$

Serving UE UL

t$_{prop\_ue}$

Interfering UE UL

TA$_I$

Interfering UE UL

t3

t4          t1

t2

DL-ITF UL timing difference

# FIG. 5

```
                    ┌──────────┐
                    │  START   │
                    └──────────┘
                         │
                         ▼
        ┌───────────────────────────────────┐
        │  RECEIVE UE CAPABILITY INFORMATION │─── S510
        │       FROM REFERENCE UE            │
        └───────────────────────────────────┘
                         │
                         ▼
  NO          ◇─────────────────────◇
◄─────────────   IS REFERENCE UE FD    ─── S520
              ◇      TERMINAL?       ◇
                ◇─────────────────◇
                         │ YES
                         ▼
        ┌───────────────────────────────────┐
        │  TRANSMIT INFORMATION ABOUT UL     │─── S530
        │  TIMING OF INTERFERING UE TO       │
        │  REFERENCE UE                      │
        └───────────────────────────────────┘
                         │
                         ▼
        ┌───────────────────────────────────┐
        │  RECEIVE CLI MEASUREMENT REPORT    │─── S540
        │       FROM REFERENCE UE            │
        └───────────────────────────────────┘
                         │
                         ▼
        ┌───────────────────────────────────┐
        │  PROVIDE INFORMATION ABOUT         │─── S550
        │  INTERFERENCE UL CHANNEL TO        │
        │  REFERENCE UE BASED ON CLI         │
        │  MEASUREMENT REPORT                │
        └───────────────────────────────────┘
                         │
                         ▼
                    ┌──────────┐
                    │   END    │
                    └──────────┘
```

# FIG. 6

# FIG. 7

```
              ┌─────────┐
              │  START  │
              └────┬────┘
                   │
                   ▼
  ┌──────────────────────────────────┐
  │ TRANSMIT UE CAPABILITY INFORMATION│──── S710
  │        TO BASE STATION            │
  └──────────────┬───────────────────┘
                 │
                 ▼
  ┌──────────────────────────────────┐
  │  RECEIVE INFORMATION ABOUT UL TIMING│──── S720
  │   OF INTERFERING UE BASE STATION  │
  └──────────────┬───────────────────┘
                 │
                 ▼
  ┌──────────────────────────────────┐
  │    MEASURE CLI BASED ON UL TIMING │──── S730
  └──────────────┬───────────────────┘
                 │
                 ▼
  ┌──────────────────────────────────┐
  │   TRANSMIT CLI MEASUREMENT REPORT │──── S740
  │         TO BASE STATION           │
  └──────────────┬───────────────────┘
                 │
                 ▼
  ┌──────────────────────────────────┐
  │  RECEIVE INTERFERENCE UL INFORMATION│
  │ FROM BASE STATION AND PERFORM JOINT│
  │ DETECTION ON UL OF INTERFERING UE AND│──── S750
  │  DL OF REFERENCE UE BASED ON      │
  │   INTERFERENCE UL INFORMATION     │
  └──────────────┬───────────────────┘
                 │
                 ▼
              ┌─────────┐
              │   END   │
              └─────────┘
```

# FIG. 8

START

RECEIVE UE CAPABILITY INFORMATION
FROM REFERENCE UE — S810

IS REFERENCE UE FD TERMINAL? — S820

NO

YES

TRANSMIT CLI-RS CONFIGURATION INFORMATION
TO REFERENCE UE AND INTERFERING UE — S830

TRANSMIT CONFIGURATION INFORMATION
REGARDING TIMING WINDOW FOR
CLI-RS MEASUREMENT TO REFERENCE UE — S840

RECEIVE CLI MEASUREMENT REPORT
FROM REFERENCE UE — S850

PROVIDE INFORMATION ABOUT INTERFERENCE
UL CHANNEL TO REFERENCE UE BASED ON
CLI MEASUREMENT REPORT — S860

END

# FIG. 9

# FIG. 10

START

TRANSMIT UE CAPABILITY INFORMATION
TO BASE STATION — S1010

RECEIVE CLI-RS CONFIGURATION INFORMATION — S1020

RECEIVE INFORMATION ABOUT TIMING WINDOW
FOR CLI-RS MEASUREMENT — S1030

MEASURE CLI BASED ON CLI-RS AND
TRANSMIT CLI MEASUREMENT REPORT — S1040

RECEIVE INTERFERENCE UL INFORMATION FROM
BASE STATION AND PERFORM JOINT DETECTION ON DL
OF REFERENCE UE AND UL OF INTERFERING UE
BASED ON INTERFERENCE UL INFORMATION — S1050

END

# FIG. 11

Europäisches
Patentamt

European
Patent Office

Office européen
des brevets

## EUROPEAN SEARCH REPORT

Application Number

EP 24 18 4406

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/056822 A1 (QUALCOMM INC [US] ET AL.) 24 March 2022 (2022-03-24) * page 26, paragraph [136] - page 42, paragraph [181]; figures 4B, 10, 11, 14, 15 * | 1-15 | INV. H04W24/08 H04W24/10 H04L5/00 H04B17/345 H04L5/14 |
| | ----- | | |
| | | | TECHNICAL FIELDS SEARCHED (IPC) |
| | | | H04W H04L |

The present search report has been drawn up for all claims

| Place of search | Date of completion of the search | Examiner |
|---|---|---|
| The Hague | 15 November 2024 | Gökceli, Selahattin |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.................................................................................
& : member of the same patent family, corresponding
   document

EPO FORM 1503 03.82 (P04C01)

26

## ANNEX TO THE EUROPEAN SEARCH REPORT
## ON EUROPEAN PATENT APPLICATION NO.

EP 24 18 4406

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2024

| Patent document cited in search report | Publication date | Patent family member(s) | Publication date |
|---|---|---|---|
| WO 2022056822 A1 | 24-03-2022 | US 2024298198 A1 | 05-09-2024 |
| | | WO 2022056822 A1 | 24-03-2022 |

For more details about this annex : see Official Journal of the European Patent Office, No. 12/82